# EUROPÄISCHE PATENTSCHRIFT

(11) **EP 2 180 204 B1**
(45) Veröffentlichungstag und Bekanntmachung des Hinweises auf die Patenterteilung: **01.03.2017**
(21) Anmeldenummer: 09170153.2
(22) Anmeldetag: 14.09.2009
(51) Int. Cl.: F16F 1/44, F16F 9/05, B61F 5/10, B61F 5/14

(54) **Zusatzfeder mit Gleitfläche**
Additional spring with slide
Ressort supplémentaire doté d'une surface de glissement

(30) Priorität: 24.10.2008 DE 102008037484
(43) Veröffentlichungstag der Anmeldung: 28.04.2010
(73) Patentinhaber: ContiTech Luftfedersysteme GmbH, 30165 Hannover (DE)
(72) Erfinder: Deiters, Matthias, 30169, Hannover (DE); Gedenk, Volker, 30966, Hemmingen (DE)
(74) Vertreter: Finger, Karsten

(56) Entgegenhaltungen:
- EP-A1- 0 969 223
- WO-A1-2005/005220
- DE-A1- 2 305 878
- FR-A1- 2 896 220
- US-A- 5 941 510
- US-A1- 2006 186 586

## Beschreibung

Die Erfindung betrifft eine Zusatz- oder Notfeder einer Federung eines Fahrzeuges, wobei die Federung aus einer Hauptfeder und einer Notfeder besteht, welche zwischen Karosserie bzw. Wagenkasten und Fahrwerk bzw. Fahrgestell oder Fahrschemel des Fahrzeuges so angeordnet sind, dass bei einem Ausfall der Hauptfeder die Karosserie am Fahrwerk durch die Notfeder abgestützt wird und die Abstützung über gegenüberliegende zusammenwirkende karosserieseitige und fahrgestellseitige Auflage- und Gleitflächen erfolgt.

Die US 3,826,507 offenbart eine Luftfeder für ein Schienenfahrzeug, welche mit einer Zusatzfeder bzw. Notfeder versehen ist. Die Zusatzfeder ist dabei als Blockfeder aus einem elastomeren Material wie etwa Gummi ausgebildet und so angeordnet, dass der Wagenkasten bei einem Luftverlust in der Luftfeder auf der Zusatzfeder aufsetzen kann. Am Oberteil der Zusatzfeder ist dazu eine vorspringende Auflageplatte oder Rippe angeordnet, auf der bei Luftverlust eine entsprechend ausgebildete Gegenplatte des Wagenkastens aufsetzt. Die Auflageplatte oder Rippe ist dabei über ein weiteres Bauteil, nämlich einem topfförmigen Flansch, mit dem Oberteil der Zusatzfeder verbunden. Zusätzlich zwischen Zusatzfeder und Auflageplatte oder zwischen Zusatzfeder und Drehgestell angeordnete Rollenlager verhindern eine zu starke Reibung zwischen den einzelnen Bauteilen bei engen Kurvendurchfahrten.

Die EP 1 644 234 B1 offenbart eine zentrierende Notfederabstützung für eine Luftfeder, bei der die über die Luftfeder verbundenen Balgfelgen Führungsnuten aufweisen, die bei Auflage des Wagenkastens auf der Notfeder/Zusatzfeder einen seitlichen Versatz des Wagenkastens in Bezug auf das Fahrgestell verhindern sollen. Die einander zugeneigten Flächen der Führungsnuten und ihrer Gegenstücke sind zusätzlich mit Gleitelementen versehen, um bei Verdrehungen oder Querverschiebungen des Wagenkastens relativ zum Fahrgestell die Reibung zu vermindern.

Die US 3,904,181 offenbart eine Luftfeder bzw. eine Balgfeder mit Fluidfüllung, welche ebenfalls mit einer Zusatzfeder bzw. Notfeder versehen, die als Blockfeder vorgespannt ist, um sowohl einen möglichst geringen Raumbedarf im Normalfall als auch eine genaue Auslegung der Federwege und Federkräfte beider Federn in ihren jeweilig vorgesehenen unterschiedlichen Einsatzbedingungen zu erlauben. Auch hier sind nicht weiter spezifizierte Gleitflächen zwischen Wagenkasten und Zusatzfeder vorgesehen, die eine zu starke Reibung verhindern sollen.

Alle diese Lösungen offenbaren nachteiligerweise relativ aufwendige Konstruktionen, bei denen die Gleitfunktion durch die separaten Gleitelemente und viele andere Bauteile aufgebaut wird, welche alle zusätzlich zur eigentlichen Notfeder/Zusatzfeder bereitgestellt und montiert werden müssen. Weiterhin besteht damit der Nachteil, dass die Verbindungen der Bauteile sich unter hohen Belastungen lösen können.

Auch sind Notfederabstützungen für Luftfedern bekannt, bei denen eine Blockfeder so angeordnet, dass sie bei Luftausfall direkt mit der oberen Gegenplatte in Kontakt kommt. Da der Gummi dafür aber nicht ausgelegt ist, ergibt sich ein hoher Verschleiß der Blockfeder. Besonders kommt das zum Tragen bei einer Schrägstellung des Systems.

Die FR 2 896 220 A1 offenbart eine Luftfeder für ein Kraftfahrzeug, bei der ein Zusatzvolumen in einem Hohlraum des Deckels angeordnet ist. Bei dieser Ausführung ist eine Zusatz oder Notfeder vorhanden, die mit einer Auflage-oder Gleitfläche ausgebildet ist und mit einer Auflage-oder Gleitfläche des jeweils anderen Federteils zusammenwirkt

Die US2006186586 A1 offenbart eine Luftfeder für ein Kraftfahrzeug, bei der innerhalb der Luftkammer eine Abstützung vorgesehen ist, die aus einem an seinem Ende konvex ausgebildeten Stab besteht, der in eine konkav ausgebildete Ausnehmung im Deckel der Luftfilter eingreift und so bei einer bestimmten Einfederung das Gesamtsystem abstützt. Auch hier wirken Auflage- und Gleitfläche zusammen.

Für die Erfindung bestand daher die Aufgabe, ohne Zugeständnisse an die Eigenschaften der Zusatzfeder die Anzahl der Bauteile für Gleitelemente innerhalb einer Luftfeder mit Zusatzfeder zu reduzieren und die Montage insgesamt zu vereinfachen, damit eine kostengünstige Herstellung zu ermöglichen und ein Lösen von Verbindungen zwischen Gleitelementen und anschließenden Bauteilen sicher zu vermeiden.

Gelöst wird diese Aufgabe durch die Merkmale des Hauptanspruchs. Weitere vorteilhafte Ausbildungen sind in den Unteransprüchen offenbart.

Dabei weist die Zusatz- oder Notfeder als solche eine als Auflage- oder Gleitfläche ausgebildete Oberfläche auf, die der Auflage- oder Gleitfläche des jeweils abzustützenden Fahrzeugteiles gegenüberliegt und mit letzterer zusammenwirkt. Die Auflage- oder Gleitfläche ist also als Teil der Zusatz- oder Notfeder ausgebildet und somit in diesem Bauteil integriert. Zur sicheren und flächigen Auflage im Notfall ist die als Auflage- oder Gleitfläche ausgebildete Oberfläche der Zusatz- oder Notfeder so ausgebildet, dass sich die Oberfläche der Zusatz- oder Notfeder unter Last im Wesentlichen parallel zur gegenüberliegenden Auflage- und Gleitfläche des jeweils abzustützenden Fahrzeugteiles ausformt.

Dabei ist dabei die als Auflage- oder Gleitfläche ausgebildete Oberfläche konvex und zur gegenüberliegenden Auflage- und Gleitfläche des jeweils abzustützenden Fahrzeugteiles gewölbt ausgebildet. Dadurch lässt sich bei gegebener Elastizität der Feder allein durch entsprechende konvexe Formgebung die im Lastfall entstehende Auflagefläche sehr exakt vorgeben und anpassen.

Weiterhin weist die als Auflage- oder Gleitfläche ausgebildete Oberfläche Vertiefungen zur Aufnahme von Schmierstoffen auf. Dadurch wird der Gleitreibungskoeffizient im Notlaufbetrieb klein gehalten und es kann im Wesentlichen der gleiche Gleitreibungskoeffizient wie bei der Nutzung einer Gleitplatte realisiert werden. Die Zusatz- oder Notfeder übernimmt somit die Funktion der Gleitplatte. Zur Verringerung der oft vorhandenen hohen Reibung sind also "Schmiertaschen" in der Oberfläche gebildet. Zur Schmierung können hier alle Fette und übrige Schmierstoffe eingesetzt werden, die mit dem Material der Feder und den umgebenden Bauteilen verträglich sind und die ihre Schmierfähigkeit möglichst lange und in einem entsprechend großen Temperaturbereich behalten. Auch sind gekapselte Schmierstoffe nutzbar, etwa in die Vertiefungen eingesetzte Schmierstoffbeutel oder -perlen.

Eine vorteilhafte Weiterbildung besteht darin, dass die Vertiefungen als rechteckige oder kreisförmige Ausnehmungen in der als Auflage- oder Gleitfläche ausgebildeten Oberfläche ausgebildet sind. Damit ist die Menge an Schmierstoff leicht einstellbar durch Größe, Art und Anordnung der Ausnehmungen.

Eine weitere vorteilhafte Weiterbildung besteht darin, dass die Zusatz- oder Notfeder aus im wesentlichen Gummi besteht. Gummi ist für derartige Federungen aufgrund seiner Materialeigenschaften, die hohe Elastizität und große Festigkeit gleichermaßen bereitstellen, besonders gut geeignet.

Eine weitere vorteilhafte Weiterbildung besteht darin, dass die Zusatz- oder Notfeder als Gummi-Metall-Element ausgebildet ist. Damit lassen sich -beispielsweise auf der der Auflage- oder Gleitfläche gegenüberliegenden Seite - metallische Befestigungseinrichtungen anvulkanisieren. Auch lässt sich die Federkennlinie des Gummi-Metall-Elementes beliebig variieren durch im Wege einer Sandwich- oder Schichtbauweise im Federkörper einvulkanisierte metallische Teile oder Platten.

Vorteilhafterweise eingesetzt wird eine solche Zusatz- oder Notfeder innerhalb einer Luftfedereinrichtung zur Federung eines Fahrzeuges, wobei eine aus Gründen der Montage besonders vorteilhafte Weiterbildung darin besteht, dass die Zusatz- oder Notfeder am Fahrgestell oder -schemel montiert ist und deren als Auflage- oder Gleitfläche ausgebildete Oberfläche der Auflage- oder Gleitfläche der Karosserie oder des Wagenkastens gegenüberliegt.

Besonders vorteilhaft ist der Einsatz solcher Luftfedereinrichtungen mit der erfindungsgemäßen Zusatz- oder Notfeder in Schienenfahrzeugen, da hier einerseits eine sehr hohe Last aufgefangen werden muss und andererseits gerade im Fahrgastbereich besondere Ansprüche an den Komfort und Sicherheit gestellt werden.

Anhand eines Ausführungsbeispieles soll die Erfindung näher erläutert werden. Es zeigen
- Fig. 1: eine erfindungsgemäße Zusatz- oder Notfeder
- Fig. 2: den vorderen Teil eines schienegebundenen Kurzstreckentriebwagens mit einen Fahrschemel
- Fig. 3: eine Zusatz- oder Notfeder aus dem Stand der Technik
- Fig. 4: die erfindungsgemäße Zusatz- oder Notfeder gem. Fig. 1 in perspektivischer Darstellung

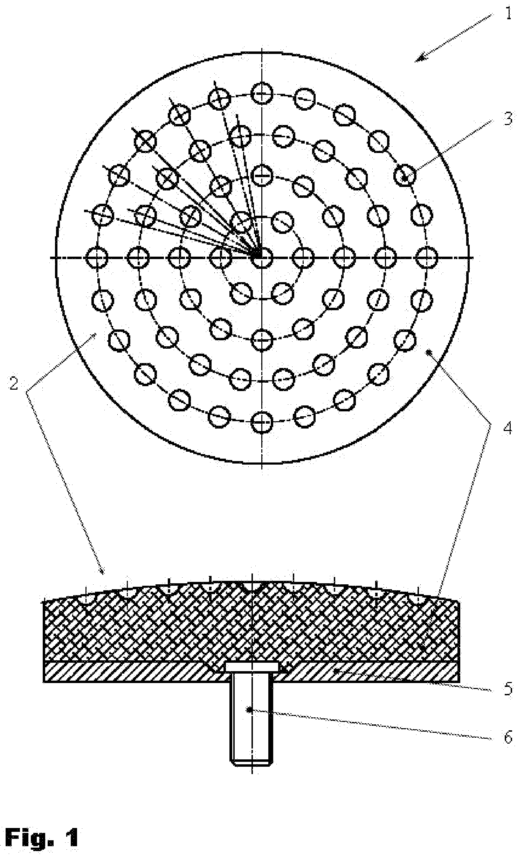

Die Fig. 1 zeigt eine erfindungsgemäße Zusatz- oder Notfeder 1 mit einer im Bauteil selbst integrierten und als Auflage- oder Gleitfläche ausgebildeten Oberfläche 2, die im Einsatzfall der an der Karosserie des Fahrzeuges ausgebildeten Auflage- oder Gleitfläche gegenüberliegt und mit letzterer zusammenwirkt.

Zur sicheren und flächigen Auflage im Notfall ist die als Auflage- oder Gleitfläche ausgebildete Oberfläche 2 der Zusatz- oder Notfeder konvex ausgebildet, so dass sich die konvex wölbende Oberfläche unter Last im Wesentlichen plan-parallel und nahezu ebenflächig zur gegenüberliegenden Auflage- und Gleitfläche ausformt, wodurch sich bei gegebener Elastizität der Feder allein durch entsprechende konvexe Formgebung die im Lastfall entstehende Auflagefläche sehr exakt vorgeben und anpassen lässt.

Die Oberfläche 2 weist eine Anzahl von Vertiefungen 3 zur Aufnahme von Schmierstoff auf. Dadurch wird der Gleitreibungskoeffizient im Notlaufbetrieb, d. h. beim Aufsetzten des Wagenkastens bzw. der Karosserie klein gehalten.

Die Zusatz- oder Notfeder 1 ist als Gummi-Metall-Element ausgebildet, bei dem an die eigentliche Gummifeder 4 eine zu Befestigung am Fahrschemel ausgebildete kreisförmige Metallplatte 5 anvulkanisiert ist, die rückseitig und mittig mit einem Gewindestift 6 versehen ist, der entsprechend durch eine Bohrung am Fahrgestell mit letzterem verschraubt wird.

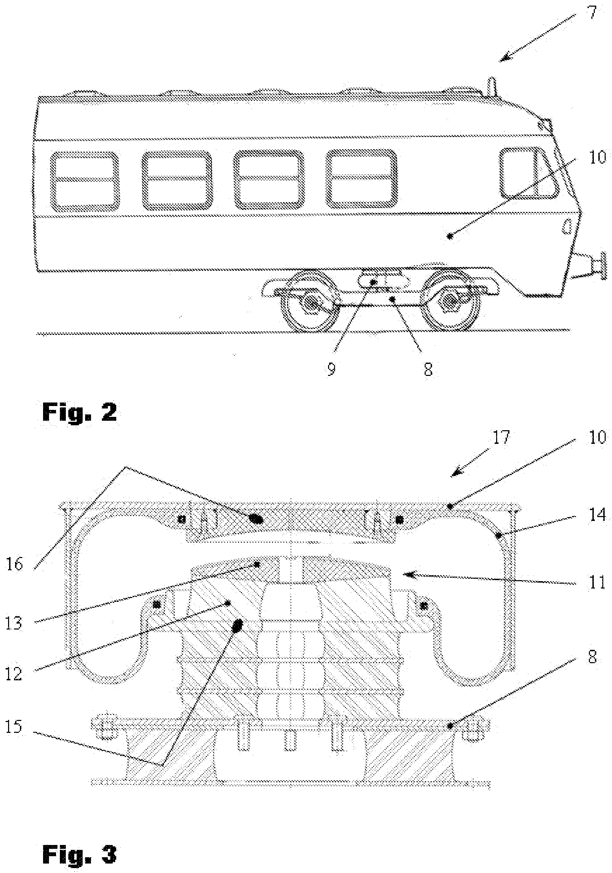

Fig. 2 zeigt den vorderen Teil eines schienegebundenen Kurzstreckentriebwagens 7 mit einen Fahrschemel bzw. Fahrgestell 8, welches über eine Luftfedereinrichtung 9 mit der Karosserie 10 des Triebwagens 7 verbunden ist. Innerhalb der Luftfedereinrichtung 9 ist eine erfindungsgemäße Zusatz- oder Notfeder 1 angeordnet. Lediglich die Anordnung, nicht die Ausführung der erfindungsgemäßen Zusatz- oder Notfeder 1 innerhalb der Luftfedereinrichtung 9 entspricht dabei der im Stand der Technik üblichen Anordnung, wie sie die Fig. 3 anhand einer Zusatz- oder Notfeder 11 aus dem Stand der Technik zeigt, welche in einer im Stand der Technik bekannten Luftfedereinrichtung 17 angeordnet ist.

Die dort gezeigte Zusatz- oder Notfeder 11 weist ein aus dem Stand der Technik bekanntes und als separates Einzelteil auf der Gummifeder 12 aufgebrachtes Gleitelement 13 aus einem Kunststoff auf. Die Luftfedereinrichtung 17 besteht dabei aus einem Luftfederbalg 14, d.h. der eigentlichen Luftfeder, welcher die Zusatzfeder umgibt und mit seinem oberen Ende an die Karosserie 10 eines Fahrzeuges und mit seinem anderen Ende an einem zum Fahrschemel 8 gehörigen Kragen 15 luftdicht verbunden ist. Karosserieseitig erkennt man das auch als obere "Balgfelge" bezeichnete Gleitelement 16, das mit seiner Auflage- oder Gleitfläche der Auflage- oder Gleitfläche des separaten Gleitelementes 13 gegenüberliegt. Bei dieser aus den Stand der Technik bekannten Konstruktion, bei denen die Gleitfunktion durch das separate Gleitelement 13 aus nichtelastischem Kunststoff und mehrere andere Bauteile aufgebaut wird, ist das Gleitelement 13 konvex ausgebildet und die Balgfelge 16 konkav und genau komplementär zur konvexen Form des Gleitelementes, um eine laterale Führung des Wagenkastens im Auflagefall zu erreichen.

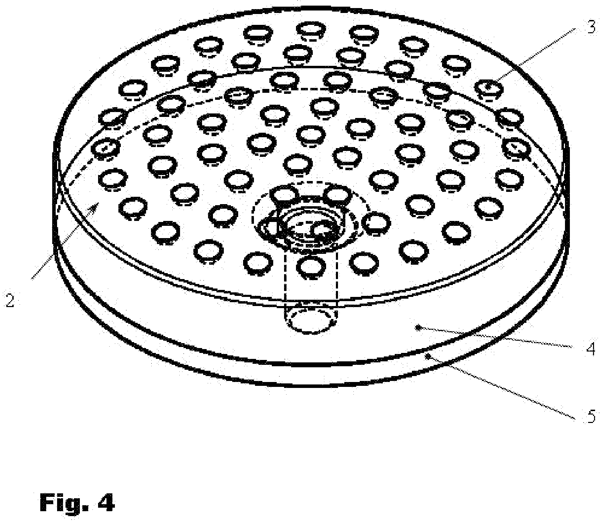

Erfindungsgemäß ist die hier gezeigte und im Stand der Technik bekannte Zusatz- oder Notfeder 11 mit dem separaten Gleitelementes 13 ersetzt durch die Zusatz- oder Notfeder 1, wie sie in der Fig. 4 noch einmal in perspektivischer Darstellung gezeigt ist. Dadurch, dass sich die erfindungsgemäße Notfeder 1 elastisch verformen und durch ihre konvexgewölbte Oberfläche dann an die gegenüberliegende Auflage- oder Gleitfläche des Wagenkastens anformen kann, kann die aufnehmende Form der Balgfelge wesentlich freier gestaltet werden und muss nicht der konvexen Außenkontur der erfindungsgemäßen Zusatz- oder Notfeder 1 genau entsprechen.

### Bezugszeichenliste

### (Teil der Beschreibung)

- 1: Zusatz- und Notfeder
- 2: Auflage- oder Gleitfläche
- 3: Vertiefungen
- 4: Gummifeder
- 5: Metallplatte
- 6: Gewindestift
- 7: Schienengebundener Triebwagen
- 8: Fahrgestell oder Fahrschemel
- 9: Luftfedereinrichtung
- 10: Karosserie
- 11: Zusatz- oder Notfeder gemäß Stand der Technik
- 12: Gummifeder gemäß Stand der Technik
- 13: Gleitelement
- 14: Luftfederbalg
- 15: Kragen
- 16: Gleitelement (Balgfelge)
- 17: Luftfedereinrichtung aus dem Stand der Technik

## Patentansprüche

1. Zusatz- oder Notfeder (1) einer Federung eines Fahrzeuges, wobei die Federung aus einer Hauptfeder und einer Notfeder besteht, welche zwischen Karosserie (10) und Fahrwerk (8) des Fahrzeuges so angeordnet sind, dass bei einem Ausfall der Hauptfeder die Karosserie durch die Notfeder abgestützt wird und die Abstützung über gegenüberliegende zusammenwirkende karosserieseitige und fahrgestellseitige Auflage- und Gleitflächen (2) erfolgt, wobei die Zusatz- oder Notfeder (1) eine als Auflage- oder Gleitfläche (2) ausgebildete Oberfläche aufweist, die der Auflage- oder Gleitfläche (2) des jeweils abzustützenden Fahrzeugteiles gegenüberliegt und mit letzterer zusammenwirkt, und
- dass die als Auflage- oder Gleitfläche (2) ausgebildete Oberfläche der Zusatz- oder Notfeder (1) so ausgebildet ist, dass sich die Oberfläche der Zusatz- oder Notfeder (1) unter Last im Wesentlichen parallel zur gegenüberliegenden Auflage- und Gleitfläche (2) des jeweils abzustützenden Fahrzeugteiles ausformt, **dadurch gekennzeichnet, dass**
- die als Auflage- oder Gleitfläche (2) ausgebildete Oberfläche konvex und zur gegenüberliegenden Auflage- und Gleitfläche (2) des jeweils abzustützenden Fahrzeugteiles gewölbt ausgebildet ist, und wobei
- die als Auflage- oder Gleitfläche (2) ausgebildete Oberfläche Vertiefungen (3) zur Aufnahme von Schmierstoffen aufweist.

2. Zusatz- oder Notfeder nach Anspruch 1, bei der die Vertiefungen als rechteckige oder kreisförmige Ausnehmungen in der als Auflage- oder Gleitfläche ausgebildeten Oberfläche ausgebildet sind.

3. Zusatz- oder Notfeder nach Anspruch 1 oder 2, bestehend aus im wesentlichen Gummi.

4. Zusatz- oder Notfeder nach einem der Ansprüche 1 bis 3, ausgebildet als Gummi-Metall-Element.

5. Luftfedereinrichtung zur Federung eines Fahrzeuges mit einer Zusatz- oder Notfeder nach einem der Ansprüche 1 bis 4.

6. Luftfedereinrichtung nach Anspruch 5, bei der die Zusatz- oder Notfeder am Fahrgestell oder -schemel montiert ist und deren als Auflage- oder Gleitfläche ausgebildete Oberfläche der Auflage- oder Gleitfläche der Karosserie oder des Wagenkastens gegenüberliegt.

7. Schienenfahrzeug mit einer Luftfedereinrichtung nach Anspruch 5 oder 6.

## Claims

1. Auxiliary or emergency spring (1) of a suspension arrangement of a vehicle, wherein the suspension arrangement is composed of a main spring and of an emergency spring, which are arranged between bodyshell (10) and running gear (8) of the vehicle such that, in the event of a failure of the main spring, the bodyshell is supported by the emergency spring, and the support is realized by way of oppositely situated, interacting abutment and sliding surfaces on the bodyshell and on the bogie, wherein the auxiliary or emergency spring (1) has a surface which is formed as abutment or sliding surface (2) and which is situated opposite, and interacts with, the abutment or sliding surface (2) of the vehicle part to be supported in each case, and
- that surface of the auxiliary or emergency spring (1) which is formed as abutment or sliding surface (2) is designed such that, under load, the surface of the auxiliary or emergency spring (1) deforms substantially parallel to the oppositely situated abutment and sliding surface (2) of the vehicle part to be supported in each case, **characterized in that**
- the surface formed as abutment or sliding surface (2) is of convex form so as to be arched towards the oppositely situated abutment and sliding surface (2) of the vehicle part to be supported in each case, and wherein
- the surface formed as abutment or sliding surface (2) has depressions (3) for receiving lubricants.

2. Auxiliary or emergency spring according to Claim 1, in which the depressions are formed as rectangular or circular recesses in the surface formed as abutment or sliding surface.

3. Auxiliary or emergency spring according to Claim 1 or 2, composed of substantially rubber.

4. Auxiliary or emergency spring according to one of Claims 1 to 3, in the form of a rubber-metal element.

5. Air spring device for the suspension of a vehicle, having an auxiliary or emergency spring according to one of Claims 1 to 4.

6. Air spring device according to Claim 5, in which the auxiliary or emergency spring is mounted on the bogie or subframe, and that surface of said spring which is formed as abutment or sliding surface is situated opposite the abutment or sliding surface of the bodyshell or of the car body.

7. Rail vehicle having an air spring device according to Claim 5 or 6.

## Revendications

1. Ressort supplémentaire ou de secours (1) d'une suspension d'un véhicule, dans lequel la suspension se compose d'un ressort principal et d'un ressort de secours, qui sont disposés entre la carrosserie (10) et le bogie (8) du véhicule, de telle manière qu'en cas de défaillance du ressort principal la carrosserie soit soutenue par le ressort de secours et que le soutien soit assuré par des faces d'appui et de glissement opposées et coopérant au niveau de la carrosserie et au niveau du bogie, dans lequel le ressort supplémentaire ou ressort de secours (1) présente une surface réalisée en forme de face d'appui ou de glissement (2), qui est opposée à la face d'appui ou de glissement (2) de la partie de véhicule respectivement à soutenir et qui coopère avec celle-ci, et dans lequel la surface du ressort supplémentaire ou de secours (1) réalisée en forme de face d'appui ou de glissement (2) est réalisée de telle manière que la surface du ressort supplémentaire ou de secours (1) se déforme sous charge essentiellement parallèlement à la face d'appui ou de glissement opposée (2) de la partie de véhicule respectivement à soutenir,
**caractérisé en ce que**
- la surface réalisée en forme de face d'appui ou de glissement (2) est convexe et est bombée en direction de la face d'appui ou de glissement opposée (2) de la partie de véhicule respectivement à soutenir, et dans lequel
- la surface réalisée en forme de face d'appui ou de glissement (2) présente des creux (3) destinés à contenir des lubrifiants.

2. Ressort supplémentaire ou de secours selon la revendication 1, dans lequel les creux sont formés par des évidements rectangulaires ou circulaires dans la surface réalisée en forme de face d'appui ou de glissement.

3. Ressort supplémentaire ou de secours selon la revendication 1 ou 2, se composant essentiellement de caoutchouc.

4. Ressort supplémentaire ou de secours selon l'une quelconque des revendications 1 à 3, réalisé sous la forme d'un élément caoutchouc-métal.

5. Dispositif d'amortisseur pneumatique pour la suspension d'un véhicule avec un ressort supplémentaire ou de secours selon l'une quelconque des revendications 1 à 4.

6. Dispositif d'amortisseur pneumatique selon la revendication 5, dans lequel le ressort supplémentaire ou de secours est monté sur le bogie ou la traverse de bogie et sa surface réalisée en forme de face d'appui ou de glissement fait face à la face d'appui ou de glissement de la carrosserie ou de la caisse de la voiture.

7. Véhicule ferroviaire avec un dispositif d'amortisseur pneumatique selon la revendication 5 ou 6.
